# EUROPEAN PATENT SPECIFICATION

(11) **EP 4 071 190 B1**
(45) Date of publication and mention of the grant of the patent: **02.12.2026**
(21) Application number: 20897559.9
(22) Date of filing: 23.10.2020
(51) Int. Cl.: C08F 299/08, C08F 2/24, C08G 77/20, C08G 77/46, C08L 83/12

(54) **HYDROPHILIC SILICONE PARTICLES AND METHOD FOR PRODUCING SAME**
HYDROPHILE SILIKONPARTIKEL UND VERFAHREN ZUM PRODUZIEREN DERSELBEN
PARTICULES DE SILICONE HYDROPHILES ET PROCÉDÉ DE PRODUCTION DE CELLES-CI

(30) Priority: 05.12.2019 JP 2019220594
(43) Date of publication of application: 12.10.2022
(73) Proprietor: Shin-Etsu Chemical Co., Ltd., Tokyo 100-0005 (JP)
(72) Inventor: TAKEWAKI, Kazuyuki, Annaka-shi, Gunma 379-0224 (JP); HAGIWARA, Mamoru, Annaka-shi, Gunma 379-0224 (JP)
(74) Representative: Sonnenhauser, Thomas Martin
(86) International application number: PCT/JP2020/039928
(87) International publication number: WO 2021/111758

(56) References cited:
- EP-A1- 2 241 587
- WO-A1-2019/130960
- JP-A- 2016 199 712
- JP-A- H02 228 313

## Description

### TECHNICAL FIELD

The present invention relates to a method for producing a hydrophilic silicone particle.

### BACKGROUND ART

Patent Document 1 proposes a crosslinked silicone particle. Furthermore, Patent Document 2 proposes adding this silicone particle to an aqueous coating composition in order to provide a coating film with delustering properties. In addition, Patent Document 3 and Patent Document 4 propose adding the silicone particle to an aqueous cosmetic in order to improve the feeling on use of the cosmetic. JPH02228313A discloses a method of controlled suspension polymerization for producing predominantly submicron sized spherical crosslinked silicone-containing copolymer particles having a controlled particle size distribution.

When used as a cosmetic, conventional silicone particles are used for the purpose of imparting dry or smooth feeling on use, etc., spreadability, soft focus effect, and so forth. However, silicone is a material having high water repellency, and there is a problem that it is difficult to disperse silicone in an aqueous cosmetic.

When any of the above-described silicone particles are used to obtain an aqueous suspension in which water is a dispersion medium, a nonionic surfactant, an anionic surfactant, a cationic surfactant, a zwitterionic surfactant, or a surfactant produced from a mixture of these surfactants is used for stabilizing the suspension.

Particularly, for use in cosmetics, it is necessary to select a surfactant that has little effect on the environment while improving the stability of these suspensions and emulsions themselves and improving dispersibility in a composition. Alkyl polyether having an alkyl group having 12 to 15 carbon atoms is considered to be a chemical substance whose effect on the environment raises concerns, and is a designated chemical substance of the PRTR (Pollutant Release and Transfer Register). The discharged amount of such alkyl polyether is made compulsory in accordance with the PRTR, and use of the alkyl polyether is becoming restricted.

In addition, since surfactant raises concerns of irritation to skin, use of a surfactant is sometimes avoided in cosmetics that are externally applied to skin, in particular, skin care cosmetics, make-up cosmetics, antiperspirant cosmetics, UV care cosmetics, etc.

As a means for avoiding such use of a surfactant, Patent Document 5 proposes a surfactant-free aqueous dispersion of silicone particles. However, the surface treatment process after producing the silicone particles is complicated, and high costs are involved, so that there has been a problem that the dispersion can only be used for some high-cost uses.

As an example of introducing a hydrophilic group in the manner of a chemical bond, Patent Document 6 considers the introduction of an amino group to the surface of a silicone particle. However, the water dispersibility and stability of the silicone particles are not reported.

### CITATION LIST

### PATENT LITERATURE

Patent Document 1: JP H11-140191 A
Patent Document 2: JP H05-009409 A
Patent Document 3: JP H10-139624 A
Patent Document 4: JP H10-175816 A
Patent Document 5: JP 2016-505081 A
Patent Document 6: JP 2008-285552 A
Patent Document 7: EP 2 241 587 A1
Patent Document 8: WO 2019/130960 A1

### SUMMARY OF INVENTION

### TECHNICAL PROBLEM

The present invention has been made in view of the above-described problems. An object of the present invention is to provide a method for producing a silicone particle that may be readily dispersed in an aqueous material without the additional use of a dispersant (typically, a surfactant), the silicone particle having a hydrophilic group.

### SOLUTION TO PROBLEM

To achieve the object, the present invention provides a method for producing a hydrophilic silicone particle as defined in claim 1. A hydrophilic silicone particle which does not form a part of the invention comprises a surfactant fixed by a chemical bond formed by radical polymerization to a surface of a silicone particle having a volume average particle size of 0.1 to 100 µm.

Such a hydrophilic silicone particle has a surfactant fixed to the surface by a chemical bond formed by radical polymerization. Therefore, the hydrophilic silicone particle may be readily dispersed in an aqueous material without the additional use of a dispersant (typically, a surfactant).

In this event, the surfactant is preferably a nonionic surfactant.

A hydrophilic silicone particle having a nonionic surfactant fixed to the surface of the particle as described can be a hydrophilic silicone particle having good properties.

Furthermore, the surfactant preferably has a cloud point of 40 to 99°C.

When a surfactant having a cloud point of 40°C or higher and 99°C or lower is fixed as described, the water dispersibility of the hydrophilic silicone particle can be provided with temperature dependence.

The present invention provides a method for producing a hydrophilic silicone particle comprising a surfactant fixed by a chemical bond formed by radical polymerization to a surface of a silicone particle having a volume average particle size of 0.1 to 100 µm, wherein when the particle size is 0.1 µm or more and less than 1 µm, the volume average particle size is measured by a light scattering method, and when the particle size is within the range of 1 to 100 µm, the volume average particle size is measured by an electric resistance method, the method comprising
fixing a hydrophilic group derived from a component (B) to a surface of a silicone particle by subjecting an emulsion to radical polymerization, the emulsion containing the following components (A) to (D):
(A) 100 parts by mass of an organopolysiloxane having a radical polymerization reactive group at both terminals;
(B) 0.5 to 50 parts by mass of a surfactant having a radical polymerization reactive group;
(C) 0.1 to 5 parts by mass of a radical generator; and
(D) 50 to 500 parts by mass of water based on 100 parts by mass of the component (A).

According to such a method for producing the hydrophilic silicone particle, the above-described hydrophilic silicone particles can be produced efficiently.

In this case, the component (B) is preferably a nonionic surfactant.

By using a nonionic surfactant as the organopolysiloxane having a radical polymerization reactive group as described, the emulsification stability of the emulsion can be improved. In addition, the surfactant fixed to the surface of the produced hydrophilic silicone particle can be a nonionic surfactant. In this manner, the hydrophilic silicone particle can have favorable properties.

Furthermore, the component (B) preferably has a cloud point of 40 to 99°C.

When a surfactant having such a cloud point is used as the surfactant having a radical polymerization reactive group, the surfactant fixed to the surface of the hydrophilic silicone particle can have a similar cloud point. In this manner, the water dispersibility of the obtained hydrophilic silicone particle can be provided with temperature dependence.

Furthermore, the component (A) can be an organopolysiloxane represented by the following formula (1), 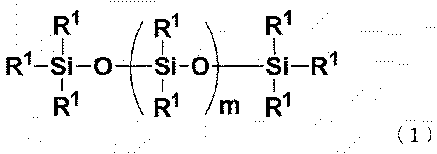 wherein in the formula (1), R¹s each independently represent a monovalent hydrocarbon group having 1 to 6 carbon atoms or a radical polymerization reactive group, provided that at least one radical polymerization reactive group is contained in one molecule, and in the formula (1), "m" is a number that satisfies 0 ≤ m ≤ 1,000.

By performing the polymerization reaction using such an organopolysiloxane, the above-described hydrophilic silicone particles can be produced efficiently.

Furthermore, the component (A) can have a radical polymerization reactive group represented by the following formula (2a) and/or the following formula (2b), 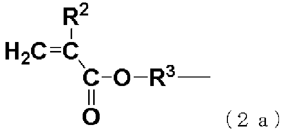 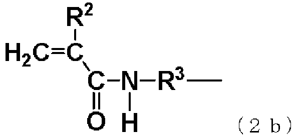 wherein in the formulae (2a) and (2b), R² represents a hydrogen atom or a methyl group, and R³ represents a linear, branched, or cyclic divalent hydrocarbon group having 1 to 6 carbon atoms.

By using an organopolysiloxane having such a radical polymerization reactive group, radical polymerization reactivity can be improved. Furthermore, properties of the hydrophilic silicone particle can be made excellent.

### ADVANTAGEOUS EFFECTS OF INVENTION

The hydrophilic silicone particle may be readily dispersed in an aqueous material without the additional use of a dispersant (typically, a surfactant). For example, for use in aqueous cosmetics that are externally applied to skin, such as skin care cosmetics, make-up cosmetics, antiperspirant cosmetics, and UV care cosmetics, there is no need to use a surfactant for blending the hydrophilic silicone particle. Therefore, it is possible to obtain a product having no risk of skin irritation. Moreover, in aqueous paints, aqueous inks, and additives for polar resins, it is unnecessary to add further surfactant for dispersing the silicone particles thereinto, thereby solving the problems of strength after curing being degraded and bubbles due to the surfactant.

In addition, the inventive method for producing the hydrophilic silicone particle makes it possible to produce such hydrophilic silicone particles efficiently.

### DESCRIPTION OF EMBODIMENTS

As described above, an object of the present invention is to provide a silicone particle that may be readily dispersed in an aqueous material without the additional use of a dispersant (typically, a surfactant), the silicone particle having a hydrophilic group.

To achieve the object, the present inventors have earnestly studied and found out that it is possible to obtain a silicone particle having a hydrophilic group in a surface thereof and that the silicone particle can be readily dispersed in water by the following means: emulsifying an organopolysiloxane having a radical polymerization reactive group while using a surfactant having a radical polymerization reactive group as an emulsifier; and subjecting the emulsion to emulsion polymerization and crosslinking.

Hereinafter, embodiments of the present invention will be described, but the present invention is not limited thereto.

### [Hydrophilic Silicone Particle]

Firstly, the hydrophilic silicone particle will be described in detail.

The hydrophilic silicone particle is a silicone particle having a volume average particle size of 0.1 to 100 µm, and a surfactant is fixed to the surface of the silicone particle by a chemical bond formed by radical polymerization. The surfactant fixed to the surface is achieved by a surfactant having a radical polymerization reactive group being fixed by a radical polymerization reaction.

The hydrophilic silicone particle has a volume average particle size of 0.1 to 100 µm as described above. The volume average particle size is preferably 0.5 to 40 µm, more preferably 1 to 20 µm. If the silicone particles have a volume average particle size of less than 0.1 µm, the silicone particles have high agglomeration property, so that the silicone particles do not readily disperse to primary particles in a dispersion medium. Meanwhile, if the silicone particles have a volume average particle size of more than 100 µm, uses of the silicone particles are considerably limited.

Note that the volume average particle size of silicone particles is measured by a method appropriately selected from microscopy, light scattering method, laser diffraction method, liquid sedimentation method, electric resistance method, etc. in accordance with the particle size of the silicone particles. For example, when the particle size is 0.1 µm or more and 1 µm or less, the volume average particle size may be measured by a light scattering method, and when within the range of 1 to 100 µm, the volume average particle size may be measured by an electric resistance method. The silicone particles are preferably spherical. In addition, in the present description, "spherical" indicates not only particles in the shape of spheres, but also includes deformed ellipsoids having an average "length of major axis/length of minor axis" (aspect ratio) of usually within the range of 1 to 4, preferably 1 to 2, more preferably 1 to 1.6, and further preferably 1 to 1.4. The shapes of the particles can be confirmed by observing the particles with an optical microscope or an electron microscope.

The surfactant fixed to the surface of the hydrophilic silicone particle is preferably a nonionic surfactant. In this manner, a hydrophilic silicone particle having favorable properties can be achieved. Specifically, the hydrophilic silicone particle has higher hydrophilicity, causes less skin irritation, and is suitable for cosmetics. Furthermore, regarding the formulation composition when using such hydrophilic silicone particles, there are no restrictions to combinations with anionic surfactants, cationic surfactants, and zwitterionic surfactants.

Furthermore, the surfactant fixed to the surface of the hydrophilic silicone particles preferably has a cloud point of 40 to 99°C. In this way, the water dispersibility of the hydrophilic silicone particles can be given temperature dependence. That is, the hydrophilic silicone particles disperse in cold water of a predetermined temperature or lower, but do not disperse in heated water of a predetermined temperature or higher. In a process of removing unreacted surfactant after the radical polymerization step, the target hydrophilic silicone particles disperse in an aqueous phase, so that it is usually not possible to purify the hydrophilic silicone particles by washing with water. However, by making use of this characteristic and washing with heated water of a predetermined temperature or higher, the hydrophilic silicone particles can be made insoluble in the aqueous phase. Thus, the hydrophilic silicone particles can be purified simply and conveniently by washing with water.

The silicone particle is preferably not sticky, and preferably has a rubber hardness of 5 to 90, more preferably 10 to 60 as measured by Type A Durometer according to JIS K 6253. When the rubber hardness is 5 or more, in particular, 10 or more, the agglomeration property of such silicone particles does not become too high, so that the particles easily disperse to primary particles in the dispersion medium. Meanwhile, when the rubber hardness is 90 or less, in particular, 60 or less, the silicone particles can retain elastic characteristics. Note that the value obtained by measuring a test piece fabricated with a composition of a silicone elastomer spherical particle and a shape and dimensions defined in JIS K 6253 is referred to as the rubber hardness.

As described above, a characteristic of the hydrophilic silicone particle is that a surfactant containing a radical polymerization reactive group is fixed to the surface of the hydrophilic silicone particle by a radical polymerization reaction.

### [Method for Producing Hydrophilic Silicone Particle]

Such a hydrophilic silicone particle can be obtained by fixing a hydrophilic group derived from a component (B) to a surface of a silicone particle by subjecting an emulsion to radical polymerization (i.e. emulsion polymerization), the emulsion containing the following components (A) to (D).
(A) 100 parts by mass of an organopolysiloxane having a radical polymerization reactive group
(B) 0.5 to 50 parts by mass of a surfactant having a radical polymerization reactive group
(C) 0.1 to 5 parts by mass of a radical generator
(D) 10 to 1000 parts by mass of water

Hereinafter, the components (A) to (D) will be described.

### [(A) Organopolysiloxane Having Radical Polymerization Reactive Group]

The component (A) organopolysiloxane having a radical polymerization reactive group in the present invention is preferably represented by the following formula (1). 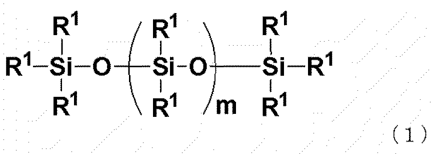 In the formula (1), R¹s each independently represent a monovalent hydrocarbon group having 1 to 6 carbon atoms or a radical polymerization reactive group, provided that at least one radical polymerization reactive group is contained in one molecule. In addition, in the formula (1), "m" is a number that satisfies 0 ≤ m ≤ 1,000.

Among the R¹s, the monovalent hydrocarbon group may be linear, branched, or cyclic, and examples thereof include alkyl groups such as methyl, ethyl, n-propyl, isopropyl, n-butyl, isobutyl, tert-butyl, n-hexyl, and cyclohexyl; aryl groups such as a phenyl group; etc.

Among these monovalent hydrocarbon groups, alkyl groups having 1 to 6 carbon atoms and aryl groups are preferable, and a methyl group, an ethyl group, and a phenyl group are more preferable.

Examples of the radical polymerization reactive group in the component (A) include an acryloyl group, a methacryloyl group, an acrylamide group, a vinyl group, an allyl group, an isoprenyl group, a styryl group, etc. However, from an aspect of radical polymerization reactivity and an aspect of the properties of the obtained hydrophilic silicone particle, groups represented by the following formula (2a) and/or (2b) are preferable.

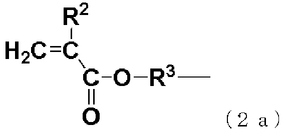

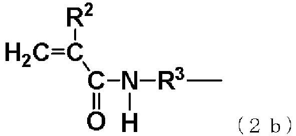

The R² in the formula (2a) and/or (2b) is preferably a hydrogen atom or a methyl group. R³ is a divalent hydrocarbon group having 1 to 6 carbon atoms, and may be linear, branched, or cyclic. Specific examples of R³ include alkylene groups such as methylene, ethylene, propylene, trimethylene, tetramethylene, isobutylene, pentamethylene, and hexamethylene groups. In particular, methylene, ethylene, and trimethylene groups are preferable, and a trimethylene group is more preferable as R³.

As described above, "m" in the formula (1) is a number that satisfies 0 ≤ m ≤ 1,000, preferably 10 ≤ m ≤ 500. When "m" is 1,000 or less, viscosity is not too high, so that excellent workability can be achieved.

The value of "m" can be calculated, for example, as an average value by ²⁹Si-NMR measurement or the like. Alternatively, "m" can be determined from a number-average molecular weight in terms of polystyrene in gel permeation chromatography (GPC) analysis.

Examples and comparative examples of such an organopolysiloxane include the compounds of the following formulae.

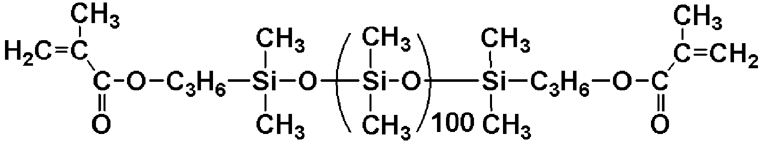

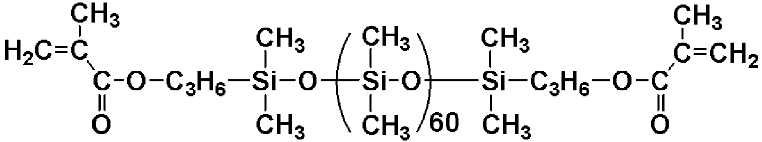

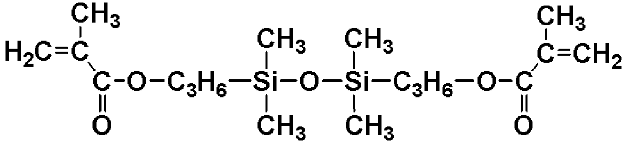

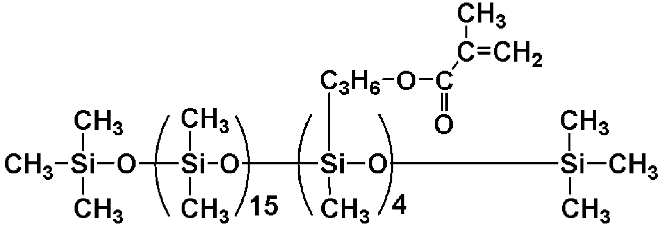

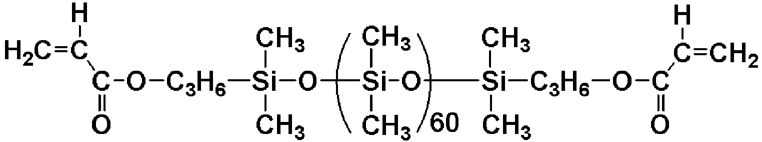

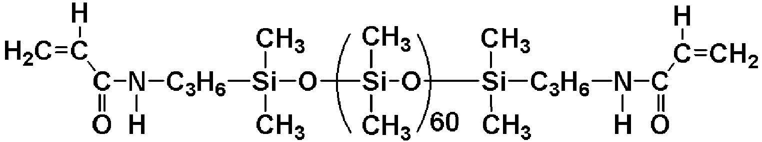

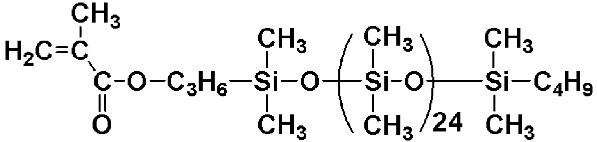

### [(B) Surfactant Having Radical Polymerization Reactive Group]

The component (B) surfactant having a radical polymerization reactive group in the present invention can emulsify and disperse the component (A) in water, and has a radical polymerization reactive group. One kind of the surfactant can be used, or two or more kinds thereof can be used in appropriate combination. Examples of the radical polymerization reactive group include a vinyl group, an acryloyl group, a methacryloyl group, an allyl group, an isoprenyl group, and a styryl group, and among commercially available products, examples include Aqualon AN series, Aqualon KN series, Aqualon RN series, Aqualon AR series, Aqualon KH series, Aqualon BC series, and Aqualon HS series (manufactured by DKS Co. Ltd.), LATEMUL PD-400 series and LATEMUL PD-104 (manufactured by Kao Corporation), ELEMINOL JS-20 and ELEMINOL RS-3000 (manufactured by Sanyo Chemical Industries, Ltd.), etc. In particular, from aspects of the emulsification stability of the component (A) and the properties of the obtained hydrophilic silicone particle, nonionic surfactants such as the Aqualon AN series, Aqualon KN series, Aqualon RN series, and LATEMUL PD-400 series are preferable.

Furthermore, as the component (B) surfactant having a radical polymerization reactive group, a surfactant having a cloud point of 40 to 99°C is preferably used. In this manner, by fixing a surfactant having a cloud point of 40°C or higher and 99°C or lower to the surface of the particle, temperature dependence can be imparted to the water dispersibility of the obtained hydrophilic silicone particle.

The blended amount of the component (B) is 0.5 to 50 parts by mass, preferably 1 to 30 parts by mass, more preferably 2 to 20 parts by mass based on 100 parts by mass of the component (A). If the blended amount of the component (B) is less than 0.5 parts by mass, emulsification is difficult, and the properties of the obtained hydrophilic silicone particles are degraded. If the blended amount exceeds 50 parts by mass, the amount of unreacted surfactant after the polymerization step becomes large, and the purification process becomes complicated.

### [(C) Radical Generator: 0.1 to 5 parts by mass]

Examples of the radical generator used in the emulsion polymerization include peroxides, azo initiators, redox initiators having a combination of an oxidizing agent and a reducing agent, photopolymerization initiators, etc.

Among these radical generators, redox initiators are preferable. In particular, preferable redox initiators include a redox initiator obtained by a combination of ferrous sulfate, sodium pyrophosphate, glucose, and hydroperoxide; and a redox initiator obtained by a combination of ferrous sulfate, disodium ethylenediaminetetraacetate, Rongalite, and hydroperoxide.

Examples of the photopolymerization initiators include 2,2-diethoxyacetophenone, 2,2-dimethoxy-1,2-diphenylethan-1-one (Irgacure 651 manufactured by BASF), 1-hydroxy-cyclohexyl-phenyl-ketone (Irgacure 184 manufactured by BASF), 2-hydroxy-2-methyl-1-phenyl-propan-1-one (Irgacure 1173 manufactured by BASF), 2-hydroxy-1-{4-[4-(2-hydroxy-2-methyl-propionyl)-benzyl]-phenyl}-2-methyl-propan-1-one (Irgacure 127 manufactured by BASF), phenyl glyoxylic acid methyl ester (Irgacure MBF manufactured by BASF), 2-methyl-1-[4-(methylthio)phenyl]-2-morpholinopropan-1-one (Irgacure 907 manufactured by BASF), 2-benzyl-2-dimethylamino-1-(4-morpholinophenyl)-1-butanone (Irgacure 369 manufactured by BASF), bis(2,4,6-trimethylbenzoyl)-phenylphosphine oxide (Irgacure 819 manufactured by BASF), 2,4,6-trimethylbenzoyldiphenylphosphine oxide (Irgacure TPO manufactured by BASF), mixtures thereof, etc.

Out of the components (C), the following are preferable in view of compatibility with the component (A). 2,2-diethoxyacetophenone, 2-hydroxy-2-methyl-1-phenyl-propan-1-one (Irgacure 1173 manufactured by BASF), bis(2,4,6-trimethylbenzoyl)-phenylphosphine oxide (Irgacure 819 manufactured by BASF), and 2,4,6-trimethylbenzoyldiphenylphosphine oxide (Irgacure TPO manufactured by BASF) .

The amount of the component (C) added is within the range of 0.1 to 5 parts by mass based on 100 parts by mass of (A). If the added amount is less than 0.1 parts by mass, curability is insufficient, and if the component (C) is added in an amount of more than 5 parts by mass, problems such as odor and bleeding occur due to the reaction residue and so forth being mixed in (contamination).

### [(D) Water]

An emulsion for producing the hydrophilic silicone particle in the present invention can be prepared by mixing, as a component (D), water with the above-described component (A), component (B), and component (C), and emulsifying and dispersing the mixture in the usual manner. The component (D) water is preferably ion-exchanged water. The water (D) is contained in an amount of 10 to 1000 parts by mass, preferably 50 to 500 parts by mass based on 100 parts by mass of the component (A).

### [Other Additives]

To the emulsion used in the inventive method for producing the hydrophilic silicone particle, various additives can be blended as necessary besides the components (A) to (D). Examples include thickeners, preservatives, pH adjusting agents, antioxidants, polymerization inhibitors, etc., and regarding each of these, one kind may be used, or an appropriate combination of two or more kinds may be used in appropriate amounts.

In the inventive production method, an emulsion containing the components (A) to (D) may be prepared, and then a radical polymerization reaction may be performed. Alternatively, an emulsion containing the components (A), (B), and (D) may be prepared, and then the component (C) may be added to perform a radical polymerization.

The emulsion can be prepared by mixing predetermined amounts of the components (A) to (D) and using a common emulsifying and dispersing apparatus to emulsify and disperse the components. Examples of common emulsifying and dispersing apparatuses include high-speed rotary centrifugal stirrers, such as a homogenizing disper, high-speed rotary shear stirrers, such as a homomixer, highpressure jetting emulsifying and dispersing apparatuses, such as a homogenizer, a colloid mill, an ultrasonic emulsifier, and the like. The desired emulsion is an oil-in-water (O/W type) emulsion, and preferably has a volume average particle size of 0.1 to 100 µm.

The emulsion obtained in this manner is subjected to radical polymerization to prepare a dispersion or slurry of silicone particles. Subsequently, by removing the component (D) water, unreacted component (B), and so forth from this dispersion or slurry, silicone particles can be obtained. Examples of methods for removing the water, unreacted component (B), and so forth include: a method of concentrating the water by a method such as dehydration by heat, filtration, centrifugation, decantation, etc., then washing with water if necessary, and furthermore, heating and drying under normal pressure or reduced pressure; a method of performing the heating and drying by spraying the dispersion in a flow of hot air; and a method of performing the heating and drying by using a flow of hot medium. If the crosslinked silicone particles obtained by removing the water, unreacted component (B), and so on is agglomerated, the particles may be pulverized with a mortar, a jet mill, or the like.

Furthermore, the silicone particle has, as described above, a surfactant fixed to the surface of the particle by a chemical bond formed by radical polymerization. When a nonionic surfactant containing a polyoxyalkylene group is used as the surfactant, a silicone particle containing a polyoxyalkylene group in the surface of the particle is obtained. Such polyoxyalkylene groups fixed to the surface of the particle can be observed by NMR analysis with heavy water.

The silicone particle has rubber elasticity, has low agglomeration property, and has high dispersibility in water, and is therefore useful for aqueous cosmetics, aqueous paints, printed substrates, adhesives, etc.

### EXAMPLE

Hereinafter, the present invention will be described specifically with reference to Examples and Comparative Examples. However, the present invention is not limited to the following Examples. Note that in the examples, the kinematic viscosity is the value measured at 25°C, and the "%" indicating concentration and content indicates "mass%". In addition, the evaluation of dispersibility was performed in the manner described below.

### [Example 1]

86.0 g of a difunctional methacryl polysiloxane (component (A)) represented by the following formula (3) and having a kinematic viscosity of 180 mm²/s, 8.6 g of a polyoxyalkylene alkenyl ether (LATEMUL-420 manufactured by Kao Corporation) (component (B)), 0.86 g of 2-hydroxy-2-methyl-1-phenyl-propan-1-one (Irgacure 1173 manufactured by BASF) (component (C)), and 76.54 g of deionized water (component (D)) were emulsified and dispersed using a homomixer. Thus, an emulsion was obtained.

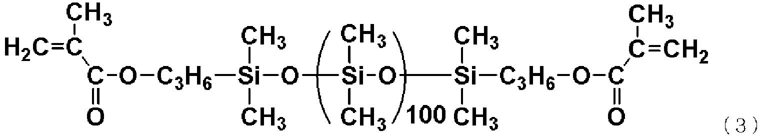

This emulsion was transferred to a glass flask equipped with an agitator having an anchor paddle and having a capacity of 0.5 liters, and the temperature was adjusted to 20 to 25°C. Then, a probe of an LED light source for photochemical reaction (wavelength: 356 nm, 507 mW) of Techno Sigma Co., Ltd. was inserted into the solution, and irradiation was started. By continuing the irradiation at the same temperature for 4 hours while stirring, an aqueous dispersion of silicone particles was obtained.

The obtained aqueous dispersion was transferred to a 1-liter glass flask equipped with an agitator having an anchor paddle, and an aqueous solution of 475 g of water and 25 g of sodium sulfate was added thereto. After stirring this for 30 minutes, the washing water in a lower layer was removed. An aqueous solution of 475 g of water and 25 g of sodium sulfate was added again, and this was stirred for 30 minutes. After that, the dehydration product was transferred again to a 2-liter glass flask equipped with an agitator having an anchor paddle, and the washing water in a lower layer was removed to obtain an aqueous dispersion of silicone particles. Furthermore, the dispersion was washed twice with 1000 g of heated water of 90°C, and an aqueous dispersion of silicone particles was freeze-dried to obtain white silicone particles.

When the obtained silicone particles were dispersed in water without using a surfactant and measured using an electric resistance method particle size distribution analyzer (Multisizer 3, manufactured by BECKMAN COULTER), the volume average particle size was 7.9 µm. When the silicone particles were subjected to NMR analysis in heavy water, -(CH₂CH₂O)- groups were detected, and it was judged that the silicone particles had a polyoxyalkylene unit fixed to the surface of the silicone particles.

Furthermore, the hardness of the silicone elastomer constituting the silicone particles was measured as follows. The difunctional methacryl polysiloxane shown by the formula (3) and 2-hydroxy-2-methyl-1-phenyl-propan-1-one (Irgacure 1173 manufactured by BASF) were mixed in the above-described blending ratio, and poured into a glass petri dish so as to have a thickness of 6 mm. Under a nitrogen atmosphere, the mixture was irradiated with a UV-LED irradiator (wavelength: 365 nm, 154 mW) for 5 minutes to obtain a silicone elastomer having no stickiness. When the hardness of the silicone elastomer was measured with a Durometer A hardness meter, the hardness was 18.

### [Example 2]

86.0 g of a difunctional methacryl polysiloxane (component (A)) represented by the formula (3) and having a kinematic viscosity of 180 mm²/s, 8.6 g of a polyoxyalkylene alkenyl ether (LATEMUL-420 manufactured by Kao Corporation) (component (B)), and 77.4 g of deionized water (component (D)) were emulsified and dispersed using a homomixer. Thus, an emulsion was obtained.

28.0 g of a 1% aqueous solution of dipotassium persulfate (an aqueous solution of the component (C)) was added to the emulsion and stirred at 75°C for 8 hours to obtain an aqueous dispersion of silicone particles.

The obtained aqueous dispersion was transferred to a 1-liter glass flask equipped with an agitator having an anchor paddle, and an aqueous solution of 475 g of water and 25 g of sodium sulfate was added thereto. After stirring this for 30 minutes, the washing water in a lower layer was removed. An aqueous solution of 475 g of water and 25 g of sodium sulfate was added again, and this was stirred for 30 minutes. After that, the dehydration product was transferred again to a 2-liter glass flask equipped with an agitator having an anchor paddle, and the washing water in a lower layer was removed to obtain an aqueous dispersion of silicone particles. Furthermore, the dispersion was washed twice with 1000 g of heated water of 90°C, and an aqueous dispersion of silicone particles was freeze-dried to obtain white silicone particles.

When the obtained silicone particles were dispersed in water without using a surfactant and measured using an electric resistance method particle size distribution analyzer (Multisizer 3, manufactured by BECKMAN COULTER), the volume average particle size was 8.5 µm. When the silicone particles were subjected to NMR analysis in heavy water, -(CH₂CH₂O)- groups were detected, and it was judged that the silicone particles had a polyoxyalkylene unit fixed to the surface of the silicone particles.

### [Example 3]

86.0 g of a difunctional methacryl polysiloxane (component (A)) represented by the formula (3) and having a kinematic viscosity of 180 mm²/s, 8.6 g of a polyoxyethylene-1-(allyloxymethyl) alkyl ether (Aqualon KN-10 manufactured by DKS Co. Ltd.) (component (B)), and 77.4 g of deionized water (component (D)) were emulsified and dispersed using a homomixer. Thus, an emulsion was obtained.

28.0 g of a 1% aqueous solution of dipotassium persulfate (an aqueous solution of the component (C)) was added to the emulsion and stirred at 75°C for 8 hours to obtain an aqueous dispersion of silicone particles.

The obtained aqueous dispersion was transferred to a 1-liter glass flask equipped with an agitator having an anchor paddle, and an aqueous solution of 475 g of water and 25 g of sodium sulfate was added thereto. After stirring this for 30 minutes, the washing water in a lower layer was removed. An aqueous solution of 475 g of water and 25 g of sodium sulfate was added again, and this was stirred for 30 minutes. After that, the dehydration product was transferred again to a 2-liter glass flask equipped with an agitator having an anchor paddle, and the washing water in a lower layer was removed to obtain an aqueous dispersion of silicone particles. Furthermore, the dispersion was washed twice with 1000 g of heated water of 90°C, and an aqueous dispersion of silicone particles was freeze-dried to obtain white silicone particles.

When the obtained silicone particles were dispersed in water without using a surfactant and measured using an electric resistance method particle size distribution analyzer (Multisizer 3, manufactured by BECKMAN COULTER), the volume average particle size was 4.7 µm. When the silicone particles were subjected to NMR analysis in heavy water, -(CH₂CH₂O)- groups were detected, and it was judged that the silicone particles had a polyoxyalkylene unit fixed to the surface of the silicone particles.

### [Comparative Example 1]

86.0 g of a difunctional methacryl polysiloxane represented by the formula (3) and having a kinematic viscosity of 180 mm²/s, 8.6 g of a polyoxyethylene lauryl ether (EMULGEN 109P manufactured by Kao Corporation), 0.86 g of 2-hydroxy-2-methyl-1-phenyl-propan-1-one (Irgacure 1173 manufactured by BASF), and 76.54 g of deionized water were emulsified and dispersed using a homomixer. Thus, an emulsion was obtained. That is, in this Comparative Example 1, a surfactant having no radical polymerization reactive groups was used as the surfactant.

This emulsion was transferred to a 0.5-liter glass flask equipped with an agitator having an anchor paddle, and the temperature was adjusted to 20 to 25°C. Then, a probe of an LED light source for photochemical reaction (wavelength: 356 nm, 507 mW) of Techno Sigma Co., Ltd. was inserted into the solution, and irradiation was started. By continuing the irradiation at the same temperature for 4 hours while stirring, an aqueous dispersion of silicone particles was obtained.

The obtained aqueous dispersion was transferred to a 1-liter glass flask equipped with an agitator having an anchor paddle, and an aqueous solution of 475 g of water and 25 g of sodium sulfate was added thereto. After stirring this for 30 minutes, the washing water in a lower layer was removed. An aqueous solution of 475 g of water and 25 g of sodium sulfate was added again, and this was stirred for 30 minutes. After that, the dehydration product was transferred again to a 2-liter glass flask equipped with an agitator having an anchor paddle, and the washing water in a lower layer was removed to obtain an aqueous dispersion of silicone particles. Furthermore, the dispersion was washed twice with 1000 g of heated water of 90°C, and an aqueous dispersion of silicone particles was freeze-dried to obtain white silicone particles.

The obtained silicone particles exhibited hydrophobicity, and it was not possible to disperse the silicone particles in water without using a surfactant.

### [Comparative Example 2]

86.0 g of a difunctional methacryl polysiloxane represented by the formula (3) and having a kinematic viscosity of 180 mm²/s, 8.6 g of a polyoxyethylene lauryl ether (EMULGEN 109P manufactured by Kao Corporation), and 77.4 g of deionized water were emulsified and dispersed using a homomixer. Thus, an emulsion was obtained. That is, in this Comparative Example 2, a surfactant having no radical polymerization reactive groups was used as the surfactant.

28.0 g of a 1% aqueous solution of dipotassium persulfate was added to the emulsion and stirred at 75°C for 8 hours to obtain an aqueous dispersion of silicone particles.

The obtained aqueous dispersion was transferred to a 1-liter glass flask equipped with an agitator having an anchor paddle, and an aqueous solution of 475 g of water and 25 g of sodium sulfate was added thereto. After stirring this for 30 minutes, the washing water in a lower layer was removed. An aqueous solution of 475 g of water and 25 g of sodium sulfate was added again, and this was stirred for 30 minutes. After that, the dehydration product was transferred again to a 2-liter glass flask equipped with an agitator having an anchor paddle, and the washing water in a lower layer was removed to obtain an aqueous dispersion of silicone particles. Furthermore, the dispersion was washed twice with 1000 g of heated water of 90°C, and an aqueous dispersion of silicone particles was freeze-dried to obtain white silicone particles.

The obtained silicone particles exhibited hydrophobicity, and it was not possible to disperse the silicone particles in water without using a surfactant.

It should be noted that the present invention is not limited to the above-described embodiments. The embodiments are just examples.

## Claims

1. A method for producing a hydrophilic silicone particle comprising a surfactant fixed by a chemical bond formed by radical polymerization to a surface of a silicone particle having a volume average particle size of 0.1 to 100 µm, wherein when the particle size is 0.1 µm or more and less than 1 µm, the volume average particle size is measured by a light scattering method, and when the particle size is within the range of 1 to 100 µm, the volume average particle size is measured by an electric resistance method, the method comprising
fixing a hydrophilic group derived from a component (B) to a surface of a silicone particle by subjecting an emulsion to radical polymerization, the emulsion containing the following components (A) to (D):
(A) 100 parts by mass of an organopolysiloxane having a radical polymerization reactive group at both terminals;
(B) 0.5 to 50 parts by mass of a surfactant having a radical polymerization reactive group;
(C) 0.1 to 5 parts by mass of a radical generator; and
(D) 50 to 500 parts by mass of water based on 100 parts by mass of the component (A).

2. The method for producing the hydrophilic silicone particle according to claim 1, wherein the component (B) is a nonionic surfactant.

3. The method for producing the hydrophilic silicone particle according to claim 1 or 2, wherein the component (A) is an organopolysiloxane represented by the following formula (1), 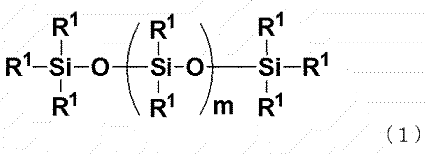 wherein in the formula (1), R¹s each independently represent a monovalent hydrocarbon group having 1 to 6 carbon atoms or a radical polymerization reactive group, provided that at least one radical polymerization reactive group is contained in one molecule, and in the formula (1), "m" is a number that satisfies 0 ≤ m ≤ 1,000.

4. The method for producing the hydrophilic silicone particle according to any one of claims 1 to 3, wherein the component (A) has a radical polymerization reactive group represented by the following formula (2a) and/or the following formula (2b), 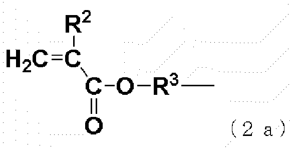 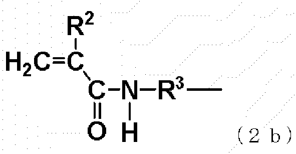 wherein in the formulae (2a) and (2b), R² represents a hydrogen atom or a methyl group, and R³ represents a linear, branched, or cyclic divalent hydrocarbon group having 1 to 6 carbon atoms.

## Patentansprüche

1. Verfahren zur Herstellung eines hydrophilen Silikonpartikels, das ein Tensid umfasst, das durch eine durch radikalische Polymerisation gebildete chemische Bindung an einer Oberfläche eines Silikonpartikels mit einer volumengemittelten Partikelgröße von 0,1 bis 100 µm fixiert ist, wobei, wenn die Partikelgröße 0,1 µm oder mehr und weniger als 1 µm beträgt, die volumengemittelte Partikelgröße mittels eines Lichtstreuverfahrens gemessen wird, und wenn die Partikelgröße im Bereich von 1 bis 100 µm liegt, die volumengemittelte Partikelgröße mittels eines elektrischen Widerstandsverfahrens gemessen wird, wobei das Verfahren umfasst
Fixieren einer von einer Komponente (B) abgeleiteten hydrophilen Gruppe an einer Oberfläche eines Silikonpartikels durch Unterziehen einer Emulsion einer radikalischen Polymerisation, wobei die Emulsion die folgenden Komponenten (A) bis (D) enthält:
(A) 100 Masseteile eines Organopolysiloxans, das an beiden Ende eine gegenüber radikalischer Polymerisation reaktive Gruppe aufweist;
(B) 0,5 bis 50 Masseteile eines Tensids, das eine gegenüber radikalischer Polymerisation reaktive Gruppe aufweist;
(C) 0,1 bis 5 Masseteile eines Radikalbildners; und
(D) 50 bis 500 Masseteile Wasser, bezogen auf 100 Masseteilen der Komponente (A).

2. Verfahren zur Herstellung des hydrophilen Silikonpartikels nach Anspruch 1, wobei die Komponente (B) ein nichtionisches Tensid ist.

3. Verfahren zur Herstellung des hydrophilen Silikonpartikels nach Anspruch 1 oder 2, wobei die Komponente (A) ein Organopolysiloxan ist, das durch die folgende Formel (1) repräsentiert ist, 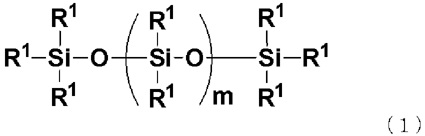 wobei in der Formel (1) die R¹ jeweils unabhängig voneinander eine einwertige Kohlenwasserstoffgruppe mit 1 bis 6 Kohlenstoffatomen oder eine gegenüber radikalischer Polymerisation reaktive Gruppe repräsentieren, sofern mindestens eine gegenüber radikalischer Polymerisation reaktive Gruppe in einem Molekül enthalten ist, und in der Formel (1) "m" eine Zahl ist, die die Bedingung 0 ≤ m ≤ 1.000 erfüllt.

4. Verfahren zur Herstellung des hydrophilen Silikonpartikels nach einem der Ansprüche 1 bis 3, wobei die Komponente (A) eine gegenüber radikalischer Polymerisation reaktive Gruppe repräsentiert, die durch die folgende Formel (2a) und/oder die folgende Formel (2b) repräsentiert wird, 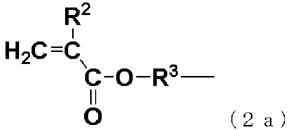 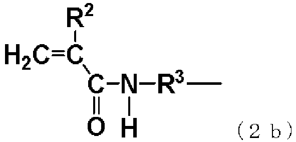 wobei in den Formeln (2a) und (2b) R² ein Wasserstoffatom oder eine Methylgruppe repräsentiert und R³ eine lineare, verzweigte oder cyclische zweiwertige Kohlenwasserstoffgruppe mit 1 bis 6 Kohlenstoffatomen repräsentiert.

## Revendications

1. Procédé de production d'une particule de silicone hydrophile comprenant un tensioactif fixé par une liaison chimique formée par polymérisation radicalaire à la surface d'une particule de silicone ayant une taille moyenne en volume de particule comprise entre 0,1 et 100 µm, dans lequel, lorsque la taille de particule est supérieure ou égale à 0,1 µm et inférieure à 1 µm, la taille moyenne en volume de particule est mesurée par un procédé de diffusion de lumière, et lorsque la taille de particule se situe dans la plage de 1 à 100 µm, la taille moyenne en volume de particule est mesurée par un procédé de résistance électrique, le procédé comprenant
la fixation d'un groupe hydrophile dérivé d'un composant (B) à la surface d'une particule de silicone en soumettant une émulsion à une polymérisation radicalaire, l'émulsion contenant les composants (A) à (D) suivants:
(A) 100 parties en masse d'un organopolysiloxane comportant un groupe réactif de polymérisation radicalaire aux deux extrémités;
(B) 0,5 à 50 parties en masse d'un tensioactif comportant un groupe réactif de polymérisation radicalaire;
(C) 0,1 à 5 parties en masse d'un générateur de radicaux; et
(D) 50 à 500 parties en masse d'eau, par rapport à 100 parties en masse du composant (A).

2. Procédé de production de la particule de silicone hydrophile selon la revendication 1, dans lequel le composant (B) est un tensioactif non ionique.

3. Procédé de production de la particule de silicone hydrophile selon la revendication 1 ou 2, dans lequel le composant (A) est un organopolysiloxane représenté par la formule (1) suivante: 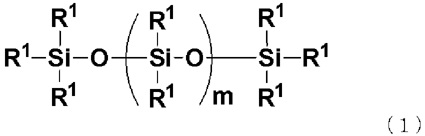 dans lequel, dans la formule (1), R¹ représente chacun indépendamment un groupe hydrocarbure monovalent comportant de 1 à 6 atomes de carbone ou un groupe réactif de polymérisation radicalaire, à condition qu'au moins un groupe réactif de polymérisation radicalaire soit présent dans une molécule, et dans la formule (1), « m » est un nombre tel que 0 ≤ m ≤ 1 000.

4. Procédé de production de la particule de silicone hydrophile selon l'une quelconque des revendications 1 à 3, dans lequel le composant (A) comporte un groupe réactif de polymérisation radicalaire représenté par la formule (2a) suivante et/ou la formule (2b) suivante, 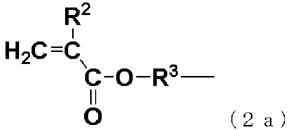 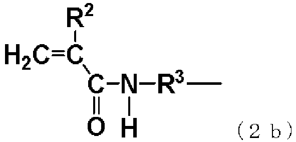 dans lequel, dans les formules (2a) et (2b), R² représente un atome d'hydrogène ou un groupe méthyle, et R³ représente un groupe hydrocarbure divalent linéaire, ramifié ou cyclique comportant de 1 à 6 atomes de carbone.
